# EUROPEAN PATENT SPECIFICATION

(11) **EP 4 053 529 B1**
(45) Date of publication and mention of the grant of the patent: **24.12.2025**
(21) Application number: 21461520.5
(22) Date of filing: 03.03.2021
(51) Int. Cl.: G01L 7/00, G01L 9/00, G01L 19/00, G01N 3/24

(54) **A DEVICE FOR MEASURING WATER PRESSURE IN SOIL PORES COMPRISING A PRESSURE GAUGE**
VORRICHTUNG ZUR MESSUNG DES WASSERDRUCKS IN BODENPOREN MIT EINEM DRUCKMESSER
DISPOSITIF DE MESURE DE LA PRESSION D'EAU DANS LES PORES DU SOL COMPRENANT UN MANOMÈTRE

(43) Date of publication of application: 07.09.2022
(73) Proprietor: Instytut Techniki Budowlanej, 00-611 Warszawa (PL)
(72) Inventor: Witowski, Marcin, 05-120 Legionowo (PL)
(74) Representative: AOMB Polska Sp. z.o.o.

(56) References cited:
- WO-A1-2016/023034
- CN-A- 109 406 302
- CN-A- 112 254 864
- US-A1- 2020 197 869

## Description

The subject of the invention is a device for measuring the water pressure in the soil pores comprising a pressure gauge.

A triaxial compression apparatus equipped with a pressure sensor placed directly on the sample is known in the art. To prevent uncontrolled leakage of water from the sample, the sample is surrounded by a tight membrane. However, this requires a hole to be made in the sample covering membrane for the pressure sensor feed lines as well as the signal lines. Meanwhile, the test requires the complete tightness of the said membranes. Even a small leakage requires to repeat the test. For this reason, apart from scientific research, this type of apparatus is not used due to the high risk of failure in the assembly of the sensor and water leakage into the sample. Said solution is disclosed for example in the publication US20200309711A1.

Another known solution is the measurement of the water pressure in the soil pores carried out at the bottom part of the sample. This measurement is correct, but requires low shear rate of the sample so that non-uniformity in pressure distribution may be neglected. Additionally, in the case of cyclic load soil testing, there may be a delay effect in the measured value of water pressure in the pores resulting from the large distance between the pressure sensor and the sample itself. Such solution is disclosed for example in publication CN109406302A.

Another known solution is monitoring of membrane modules. The extent of fouling of a spiral wound membrane module such as used in water treatment plants can be monitored using one or more sensors disposed between wraps of the membrane. The sensors, including electrodes, can communicate signals to a two-part computing device. A first part is located inside the pressure vessel in which the membrane module is disposed. The first part provides input signals and power to the sensors and receives sensor signals. A second part is located on the outside of the pressure vessel and communicates power to the first part via inductive coupling. The second part wirelessly receives the sensor signals from the first part and processes the signals to determine the extent of fouling of the membrane module. Such solution is disclosed in US2020197869A1.

It is therefore an object of the present invention to provide a device for measuring water pressure in pores of the soil, comprising a triaxial compression apparatus equipped with a pressure gauge, which is placed directly on the sample and allows routine testing of samples without risk of leakage in the vicinity of the gauge.

A device for measuring water pressure in soil pores, comprising a triaxial compression apparatus with a chamber for storing soil samples, and also comprising a pressure gauge, which according to the invention is characterized in that the pressure gauge is a wireless device comprising two modules:
- an active module, designed to measure the water pressure in the soil pores using a pressure sensor integrated with a printed circuit board, having a receiving coil and
- a passive module, designed to power an active module by magnetic induction, with a transmitting coil,

wherein the active module is located inside a flexible membrane, directly next to a surface of the chamber, wherein the flexible membrane is continuous and is configured to provide a complete tightness and prevent leakage,
the active module has a system for wireless data transmission,
the passive module is outside the flexible membrane, and
the active module and the passive module can be connected detachably by connecting means, preferably by means of magnets,
wherein the space inside the active and / or passive module is filled with a curable material, preferably with an epoxy resin,
wherein a porous disk, and optionally also a housing, is placed between the pressure sensor and the sample.

Preferably, the active module has a positioning pin for positioning the active module with respect to the sample.

Preferably, the wireless data transmission system in the active module is configured to transmit data using a Bluetooth, WiF or RFID protocol.

Preferably, the pressure sensor is placed directly on the sample.

The invention will now be presented in more detail in a preferred embodiment with reference to the drawings in which:
- Fig. 1: shows a general diagram of an apparatus for measuring the pressure of water in a sample according to the invention,

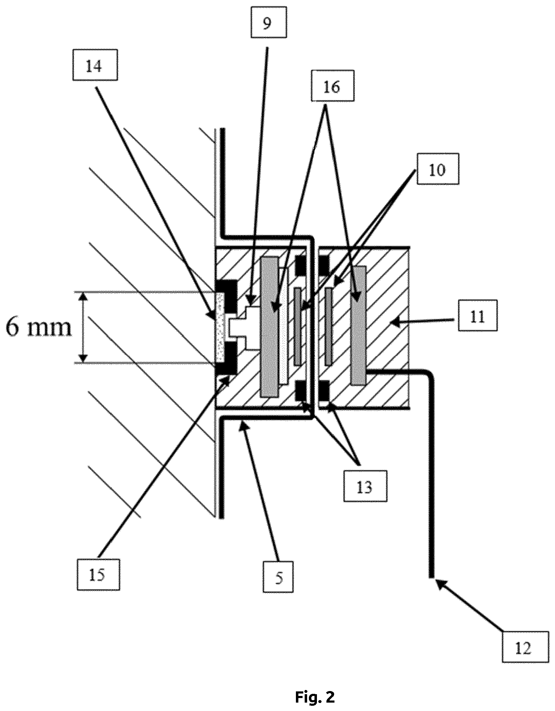

- Fig. 2: shows in more detail the construction diagram of the pressure gauge used in the device according to the invention,
- Fig. 3: shows an example of the results obtained with the device according to the invention - i.e. change of water pressure in soil pores as a function of time, and
- Fig. 4: shows exemplary results obtained with the device according to the invention, i.e. change of water pressure in soil pores as a function of axial deformation.

The figures use the following markings:
1 - upper drain
2 - active module
3 - positioning pin
4 - passive module
5 - flexible membrane
6 - bottom drain
7 - chamber
8 - pressure gauge
9 - pressure sensor
10 - receiving and transmitting coils
11 - filling material
12 - power cord
13 - fastening means
14 - porous disk
15 -housing
16 - printed circuit board

### A preferred embodiment of the invention

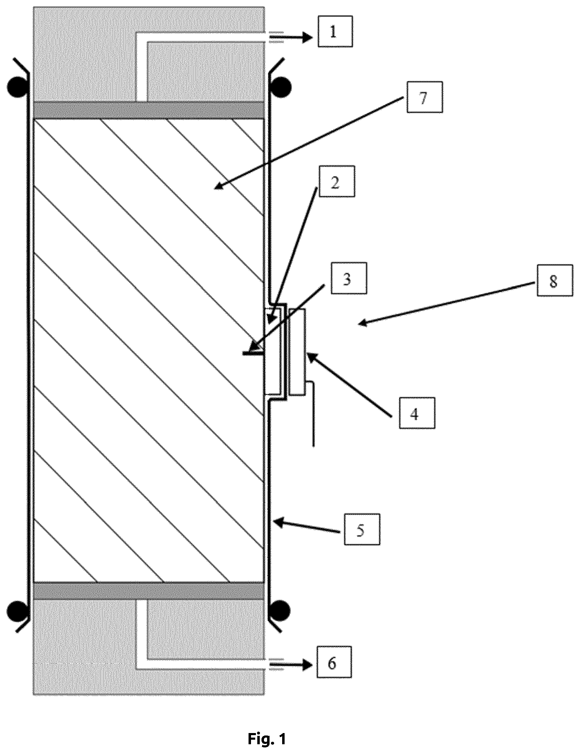

In a preferred embodiment, the device according to the invention comprising a triaxial compression apparatus with a chamber 7 for storing a soil sample, and also comprising a pressure gauge 8. The device has an upper drain 1 and a lower drain 6. The pressure gauge 8 is fully wireless - that is, that it sends data (e.g. measurement results) wirelessly and is also powered by means of induction. The pressure gauge 8 comprises of two modules: active 2 and passive 4 (fig. 1). The active module 2 is placed inside the flexible membrane 5, and the passive module 4 is placed on the outside of the flexible membrane 5, so that the two modules are in close proximity to each other separated by a flexible membrane 5. The active module 2 comprises a pressure sensor 9 integrated with a printed circuit board 16. In addition, a positioning pin 3 is attached to the active module 2 on the side of the tested sample 7, which allows the pressure sensor 9 to be properly mounted. The active module 2 also includes a receiving coil 10 and mounting means - for example magnets 13 - for positioning and detachably connecting the passive module 4 and the active module 2. The active module 2 can communicate wirelessly with a base station connected to the computer. Any known data transmission protocol can be used for wireless communication - e.g. Bluetooth, WiFi or RFID. The passive module 4 comprises fastening means - for example magnets 13 - which, as in the active module, are used to position and detachably connect the two modules. It is possible to use pairs of magnets 13, or pairs of magnet and metal element. Moreover, the passive module 4 comprises a transmitting coil 10 with a control system on a printed circuit board 16, to which electrical energy is supplied from outside the chamber 7 by means of a cable 12. The active part 2 is powered by magnetic induction between the transmitting and receiving coil 10. The space inside of the modules is preferably filled with a water-resistant material, e.g. epoxy resin 11.

Thanks to the proposed structure, the pressure sensor 9 can be placed directly on the sample. Even more preferably, the pressure sensor is positioned directly on the surface of the sample as close as possible, and at the same time a porous disk 14 and optionally also a housing 15 is provided between the pressure sensor 9 and the sample.

In any case, due to the continuity of the membrane 5, a complete tightness is ensured and there is no risk of leakage.

The housing 15 can be made of a plastic material, e.g. polyethylene terephthalate glycol-modified (PETG), but may also be metal, e.g. aluminum. For the housing 15, a material that does not react with water should be used so that the housing material does not corrode and degrade in contact with the sample or water.

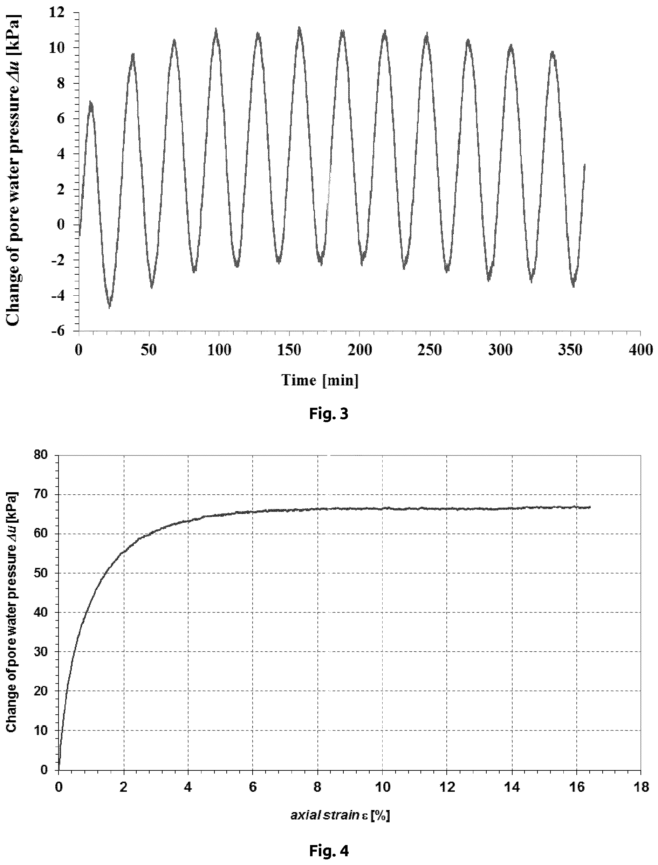

Also included are exemplary results obtained with a measuring device made as described above (Fig. 3 and Fig. 4). Fig. 3 shows the pressure change in the soil pores caused by the change in the stress deviator value during the cyclic test. 12 test cycles of 30 minutes were performed. Fig. 4 shows the increase in water pressure in the soil pores during monotonic testing of a kaolin sample in a triaxial compression apparatus under isotropic consolidation conditions and without the possibility of water drainage from the sample.

## Claims

1. A device for measuring water pressure in soil pores, comprising a triaxial compression apparatus with a chamber (7) designed to store soil samples, and also comprising a pressure gauge (8),
**characterized in that**
the pressure gauge (8) is a wireless device comprising two modules:
- an active module (2), designed to measure the water pressure in the pores of the soil using a pressure sensor (9) integrated with the printed circuit board (16), having a receiving coil (10) and
- a passive module (4), designed to power the active module (2) by magnetic induction, having a transmitting coil (10),
wherein the active module (2) is located inside a flexible membrane (5) directly next to a surface of the chamber (7), wherein the flexible membrane (5) is continuous and is configured to provide a complete tightness and prevent leakage,
the active module (2) has a system for wireless data transmission,
the passive module (4) is outside the flexible membrane (5), and
the active module (2) and the passive module (4) are detachably connected to each other by connecting means, preferably by means of magnets (13),
wherein the space inside the active (2) and / or passive (4) module is filled with a curable material (11), preferably with an epoxy resin,
wherein a porous disk (14), and optionally also a housing (15), is placed between the pressure sensor (9) and the sample.

2. The device according to claim 1, **characterized in that** the active module (2) has a positioning pin (3) for positioning the active module (2) with respect to the sample.

3. The device according to claim 1 or 2, **characterized in that** the wireless data transmission system in the active module (2) is configured to transmit data according to the Bluetooth, WiFi or RFID protocol.

4. The device according to claim 1, 2 or 3 **characterized in that** the pressure sensor (9) is placed directly on the sample.

## Patentansprüche

1. Gerät zur Messung des Wasserdrucks in Bodenporen, bestehend aus einer dreiachsigen Kompressionsvorrichtung mit einer Kammer (7) zur Aufbewahrung von Bodenproben sowie einem Manometer (8),
**dadurch gekennzeichnet, dass**
das Manometer (8) ein drahtloses Gerät ist, das aus zwei Modulen besteht:
- einem aktiven Modul (2), das zur Messung des Wasserdrucks in den Poren des Bodens mittels eines in die Leiterplatte (16) integrierten Drucksensors (9) bestimmt ist und eine Empfangsspule (10) aufweist, und
- einem passiven Modul (4), das dazu bestimmt ist, das aktive Modul (2) durch magnetische Induktion mit Strom zu versorgen und das eine Sendespule (10) aufweist,
wobei sich das aktive Modul (2) innerhalb einer flexiblen Membran (5) direkt neben einer Oberfläche der Kammer (7) befindet, wobei die flexible Membran (5) durchgehend ist und so konfiguriert ist, dass sie eine vollständige Dichtheit gewährleistet und ein Auslaufen verhindert,
das aktive Modul (2) ein System zur drahtlosen Datenübertragung aufweist,
das passive Modul (4) sich außerhalb der flexiblen Membran (5) befindet und
das aktive Modul (2) und das passive Modul (4) durch Verbindungsmittel, vorzugsweise durch Magnete (13), lösbar miteinander verbunden sind,
wobei der Raum innerhalb des aktiven (2) und/oder passiven (4) Moduls mit einem aushärtbaren Material (11), vorzugsweise mit einem Epoxidharz, gefüllt ist,
wobei eine poröse Scheibe (14) und optional auch ein Gehäuse (15) zwischen dem Drucksensor (9) und der Probe angeordnet ist.

2. Gerät nach Anspruch 1, **dadurch gekennzeichnet, dass** das aktive Modul (2) einen Positionierungsstift (3) zum Positionieren des aktiven Moduls (2) in Bezug auf die Probe aufweist.

3. Gerät nach Anspruch 1 oder 2, **dadurch gekennzeichnet, dass** das drahtlose Datenübertragungssystem im aktiven Modul (2) so konfiguriert ist, dass es Daten gemäß dem Bluetooth-, WiFi- oder RFID-Protokoll überträgt.

4. Gerät nach Anspruch 1, 2 oder 3, **dadurch gekennzeichnet, dass** der Drucksensor (9) direkt auf der Probe angeordnet ist.

## Revendications

1. Un dispositif pour mesurer la pression de l'eau dans les pores du sol, comprenant un appareil de compression triaxiale avec une chambre (7) conçue pour stocker des échantillons de sol, et comprenant également un manomètre (8),
**caractérisé en ce que**
le manomètre (8) est un dispositif sans fil comprenant deux modules :
- un module actif (2), conçu pour mesurer la pression de l'eau dans les pores du sol à l'aide d'un capteur de pression (9) intégré à la carte de circuit imprimé (16), comportant une bobine réceptrice (10) et
- un module passif (4), conçu pour alimenter le module actif (2) par induction magnétique, comportant une bobine émettrice (10),
dans lequel le module actif (2) est situé à l'intérieur d'une membrane flexible (5) directement à côté d'une surface de la chambre (7), dans lequel la membrane flexible (5) est continue et est configurée pour assurer une étanchéité complète et empêcher les fuites,
le module actif (2) a un système pour la transmission de données sans fil,
le module passif (4) se trouve à l'extérieur de la membrane flexible (5), et
le module actif (2) et le module passif (4) sont reliés l'un à l'autre de manière détachable par des moyens de connexion, de préférence au moyen d'aimants (13),
dans lequel l'espace à l'intérieur du module actif (2) et/ou passif (4) est rempli d'un matériau durcissable (11), de préférence d'une résine époxy,
dans lequel un disque poreux (14), et éventuellement également un boîtier (15), est placé entre le capteur de pression (9) et l'échantillon.

2. Le dispositif selon la revendication 1, **caractérisé en ce que** le module actif (2) a une broche de positionnement (3) pour positionner le module actif (2) par rapport à l'échantillon.

3. Le dispositif selon la revendication 1 ou 2, **caractérisé en ce que** le système de transmission de données sans fil dans le module actif (2) est configuré pour transmettre des données selon le protocole Bluetooth, WiFi ou RFID.

4. Le dispositif selon la revendication 1, 2 ou 3, **caractérisé en ce que** le capteur de pression (9) est placé directement sur l'échantillon.
